# EUROPEAN PATENT APPLICATION

(11) **EP 4 477 704 A1**
(43) Date of publication of application: **18.12.2024**
(21) Application number: 24178674.8
(22) Date of filing: 29.05.2024
(51) Int. Cl.: C08L 1/12, C08L 1/14, C08L 23/12, C08L 25/06, C08L 33/12, C08L 67/02

(54) **POROUS CELLULOSE STRUCTURE AND RESIN COMPOSITION**

(30) Priority: 13.06.2023 JP 2023097314; 26.03.2024 JP 2024049635
(71) Applicant: FUJIFILM Business Innovation Corp., Minato-ku Tokyo (JP)
(72) Inventor: NISHIOKA, Sachiko, Minamiashigara-shi, Kanagawa (JP); YAO, Kenji, Minamiashigara-shi, Kanagawa (JP); TAKAGI, Shimpei, Minamiashigara-shi, Kanagawa (JP)
(74) Representative: Kurig, Thomas

(57) **Abstract**

A porous cellulose structure includes at least one of a cellulose or a cellulose derivative as a main component, in which a specific surface area is 1 m²/g or more and 150 m²/g or less, and a void ratio is 10% or more and 50% or less.

## Description

### BACKGROUND OF THE INVENTION

### (i) Field of the Invention

The present invention relates to a porous cellulose structure and a resin composition.

### (ii) Description of Related Art

WO2016/159334A proposes "a method for producing a porous cellulose medium, the method including a step of preparing a flowable homogeneous composition including cellulose acetate, a basic compound, and a solvent including water, and gelling the composition by a deacetylation reaction of cellulose acetate.

WO2020/188698A proposes "particles including cellulose acetate, in which the particles have an average particle diameter of 80 nm or more and 100 µm or less, a sphericity of 0.7 or more and 1.0 or less, a surface smoothness of 80% or more and 100% or less, and a surface contact angle with water of 100° or more, and a total acetyl substitution degree of the cellulose acetate is 0.7 or more and 2.9 or less".

JP1999-241009A proposes "a resin composition consisting of a polymer component (A) containing a polylactic acid (a1) and an aliphatic polyester (a2) with a melting point of 50°C to 250°C, having biodegradability, in which the resin composition is a polylactic acid-based resin composition containing the polylactic acid (a1) in an amount of 90% to 50% by weight and the aliphatic polyester (a2) in an amount of 10% to 50% by weight, each with respect to a total weight of the polylactic acid (a1) and the aliphatic polyester (a2), and containing a natural substance (B) having biodegradability in an amount of 0.1 to 100 parts by weight with respect to 100 parts by weight of the polymer component (A)".

### SUMMARY OF THE INVENTION

An object of the present invention is to provide a porous cellulose structure including at least one of a cellulose or a cellulose derivative as a main component, in which the porous cellulose structure makes it possible to obtain a resin molded body having high transparency and a high impact strength, as compared with a case where a specific surface area is less than 1 m²/g or more than 150 m²/g, or a void ratio is less than 10% or more than 50%.

Means for addressing the problems include the following aspects.
<1>
   According to a first aspect of the present disclosure, there is provided a porous cellulose structure including: at least one of a cellulose or a cellulose derivative as a main component, in which a specific surface area is 1 m²/g or more and 150 m²/g or less, and a void ratio is 10% or more and 50% or less.
<2>
   According to a second aspect of the present disclosure, there is provided the porous cellulose structure according to <1>, in which in a case where the porous cellulose structure is kneaded with a resin, the porous cellulose structure may be present with an average diameter of 50 µm or less in the resin.
<3>
   According to a third aspect of the present disclosure, there is provided the porous cellulose structure according to <1> or <2>, in which a number-average molecular weight of the cellulose and the cellulose derivative may be 15,000 or more.
<4>
   According to a fourth aspect of the present disclosure, there is provided the porous cellulose structure according to any one of <1> to <3>, in which the cellulose derivative may be cellulose acetate.
<5>
   According to a fifth aspect of the present disclosure, there is provided a resin composition consisting of a kneaded material including: a transparent resin, and the porous cellulose structure according to any one of <1> to <4>.
<6>
   According to a sixth aspect of the present disclosure, there is provided the resin composition according to <5>, in which a haze value in a case where a thickness of a molded body of the resin composition is 2 mm may be 15% or less.
<7>
   According to a seventh aspect of the present disclosure, there is provided the resin composition according to <5> or <6>, in which a Charpy impact strength may be 2.5 kJ/m² or more.

According to <1>, there is provided a porous cellulose structure including at least one of a cellulose or a cellulose derivative as a main component, in which the porous cellulose structure makes it possible to obtain a resin molded body having high transparency and a high impact strength, as compared with a case where a specific surface area is less than 1 m²/g or more than 150 m²/g, or a void ratio is less than 10% or more than 50%.

According to <2>, there is provided the porous cellulose structure, which makes it possible to obtain a resin molded body having high transparency and a high impact strength in a case where the porous cellulose structure is kneaded with a resin, as compared with a case where the porous cellulose structure is present with an average diameter of more than 50 µm in the resin.

According to <3>, there is provided the porous cellulose structure, which makes it possible to obtain a resin molded body having high transparency and a high impact strength, as compared with a case where a number-average molecular weight of the cellulose and the cellulose derivative is less than 15,000.

According to <4>, there is provided the porous cellulose structure, which makes it possible to obtain a resin molded body having high transparency and a high impact strength as well as biodegradability, as compared with a case where the cellulose derivative is cellulose acetate propionate.

According to <5>, <6>, or <7>, there is provided a resin composition consisting of a kneaded material including a transparent resin and a porous cellulose structure including at least one of a cellulose or a cellulose derivative as a main component, in which the porous cellulose structure makes it possible to obtain a resin molded body having high transparency and a high impact strength, as compared with a case where the porous cellulose structure having a specific surface area of less than 1 m²/g or more than 150 m²/g, or a void ratio of less than 10% or more than 50% is applied.

### DETAILED DESCRIPTION OF THE INVENTION

Hereinafter, exemplary embodiments that are examples of the present invention will be described. The following descriptions and examples merely illustrate the exemplary embodiments, and do not limit the scope of the invention.

With regard to a numerical range described stepwise in the present specification, the upper limit value or the lower limit value of a numerical range may be replaced with the upper limit value or the lower limit value of another numerical range described stepwise. In addition, in a numerical range described in the present specification, an upper limit value or a lower limit value described in the numerical range may be replaced with a value shown in Examples.

Each component may include a plurality of corresponding substances.

In a case where the amount of each component in a composition is mentioned and plural kinds of substances corresponding to each component are present in the composition, the amount means a total amount of the plural kinds of substances present in the composition unless otherwise specified.

### <Porous Cellulose Structure>

The porous cellulose structure according to the present exemplary embodiment includes at least one of a cellulose or a cellulose derivative as a main component, and has a specific surface area of 1 m²/g or more and 150 m²/g or less, and a void ratio of 10% or more and 50% or less.

The porous cellulose structure according to the present exemplary embodiment is, for example, a powder including at least one of a cellulose or a cellulose derivative as a main component.

With the configuration, the porous cellulose structure according to the present exemplary embodiment makes it possible to obtain a resin molded body having high transparency and a high impact strength. A reason thereof is presumed as follows.

A cellulose structure having a cellulose and a cellulose derivative as a main component is rapidly biodegradable in any of environments of compost, activated sludge, and seawater, and has been put into practical use in various applications.

As one of the applications, there is a modifier for improving an impact strength.

However, in a case where the cellulose structure is kneaded into a transparent resin, the transparency of a resin composition thus obtained (that is, a resin molded body obtained from the resin composition) may be reduced. This is considered to be due to a fact that the cellulose structure is difficult to be finely dispersed in the transparent resin and has low dispersibility.

In addition, a further impact strength is also required from the cellulose structure.

In contrast, a porous cellulose structure having a specific surface area and a void ratio in the ranges has an easily collapsing property. As a result, in a case where the porous cellulose structure is kneaded into a transparent resin, the porous cellulose structure is collapsed and dispersed in the transparent resin in a fine and substantially uniform state. Therefore, a reduction in transparency of the transparent resin is suppressed and the original transparency of the transparent resin is easily maintained.

On the other hand, in a case where the porous cellulose structure is dispersed in the transparent resin in a fine and substantially uniform state, the crystallization of the transparent resin is enhanced. In addition, it is considered that due to the porous structure of the porous cellulose structure, the number of contacts between the porous cellulose structure and the transparent resin increases, the reforming capability of the porous cellulose structure is enhanced, and thus, the impact resistance of the transparent resin is improved.

In addition, in order to exhibit the transparency of the transparent resin, for example, the cellulose structure to be added may be dispersed in a small size and uniformly. For example, cellulose structures having a small size, such as cellulose nanofibers, are already known. However, since these cellulose structures have a high hydrogen bondability, secondary aggregation easily occurs and a size thereof increases in a case of being added to a transparent resin by kneading, leading to a drastic reduction in transparency of the transparent resin. On the other hand, it is considered that the porous cellulose structure according to the present exemplary embodiment can exhibit high transparency since the porous cellulose structure can be uniformly dispersed in the resin at a small size with hardly causing secondary aggregation by pulverization with a kneading torque.

In addition, with regard to the impact strength, for example, in addition to the substantially uniform dispersion, the binding property (that is, the contact area) with the transparent resin may be increased. Since the porous cellulose structure according to the present exemplary embodiment can be dispersed in the transparent resin while being pulverized by kneading as described above, the pulverized surface is irregular and the contact area with the transparent resin can be increased. Therefore, a high impact strength can be obtained.

From the above, it is presumed that the porous cellulose structure according to the present exemplary embodiment makes it possible to obtain a resin molded body having high transparency and a high impact strength due to the configuration.

Here, in recent years, there has been an increasing interest in a biomass resin or a biodegradable resin from environmental awareness typified by Sustainable Development Goals (SDGs). In particular, among the biomass resin and the biodegradable resin, a polylactic acid is a resin having high carbon-neutral biodegradability, and is expected to be used as an alternative to petroleum-derived plastics. However, the biomass resin and the biodegradable resin, in particular, the polylactic acid has low impact resistance and is limited in application.

In a case where a petroleum-based resin and a modifier are compounded with the biomass resin and the biodegradable resin, the impact resistance can be improved. However, in this case, the biomass degree is reduced, and thus, the environmental effects such as a reduction in CO₂ emission and saving of petroleum resource are decreased. In addition to this, in a case where the biomass resin and the biodegradable resin are transparent resins (in particular, the polylactic acid), the original transparency of the resin is impaired due to the modifier.

However, in a case where the porous cellulose structure according to the present exemplary embodiment is applied, it is possible to obtain a resin molded body having a high biomass degree or high biodegradability and also having high transparency and a high impact strength, even with the biomass resin or the biodegradable resin being applied as the transparent resin.

Furthermore, for example, it has been reported that excellent moldability, strength, and flexibility can be obtained while maintaining a high biomass degree by using a biodegradable resin and cellulose particles with a sphericity of 0.9 or more. However, since the specific surface area of the cellulose particles is small, a large amount of the cellulose particles is required to exhibit the effect, and the original transparency and impact resistance of the biodegradable resin are inhibited.

In addition, for example, it has been reported that a biodegradation rate has been improved while maintaining the characteristics of a polylactic acid by a resin composition consisting of the polylactic acid, a biodegradable polyester with a melting point of 50°C or higher and 250°C or lower, and a natural substance (For example, JP1999-241009A). However, since the aliphatic polyester is not a biomass resin, the biomass degree is reduced. In addition, the particle diameter of the natural substance is large and the contact area with the resin is small, the compatibility between the polylactic acid and the aliphatic polyester is low, and sea-island domains are formed. Therefore, the natural substance is difficult to be finely dispersed, and the impact resistance is thus low.

Hereinafter, the details of the porous cellulose structure according to the present exemplary embodiment will be described.

### (Cellulose and Cellulose Derivative)

The porous cellulose structure according to the present exemplary embodiment includes at least one of a cellulose or a cellulose derivative as a main component.

Here, the expression "including at least one of a cellulose or a cellulose derivative as a main component" means that a total content of the cellulose and the cellulose derivative with respect to the porous cellulose structure is 90% by mass or more, and is, for example, preferably 95% by mass or more, 98% by mass or more, or 100% by mass.

The cellulose is a polymer compound in which a large number of β-glucose molecules are linearly polymerized by a glycosidic bond.

On the other hand, examples of the cellulose derivative include cellulose acylate, cellulose ether, hydroxyalkyl cellulose, and carboxymethyl cellulose.

Among these, from the viewpoint of high biodegradability, for example, the cellulose acylate is preferable as the cellulose derivative.

The cellulose acylate is a cellulose derivative in which at least a part of hydroxy groups in a cellulose is substituted with an acyl group (acylated). The acyl group is a group having a structure of -CO-R^{AC} (in which R^{AC} represents a hydrogen atom or a hydrocarbon group).

The cellulose acylate is, for example, a cellulose derivative represented by General Formula (CA).

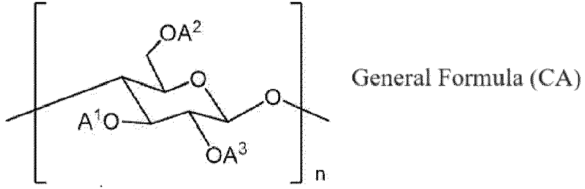

In General Formula (CA), A¹, A², and A³ each independently represent a hydrogen atom or an acyl group, and n represents an integer of 2 or more. It should be noted that at least some of n pieces of A¹'s, n pieces of A²'s, or n pieces of A³'s each represent an acyl group. The n pieces of A¹'s in the molecule may be all or partially the same as or different from each other. Similarly, n pieces of A²'s and n pieces of A³'s in the molecule may be all or partially the same as or different from each other.

In the acyl group represented by each of A¹, A², and A³, a hydrocarbon group in the acyl group may be linear, branched, or cyclic, but is, for example, preferably linear or branched, and more preferably linear.

As the acyl group represented by each of A¹, A², and A³, the hydrocarbon group in the acyl group may be a saturated hydrocarbon group or an unsaturated hydrocarbon group, but is, for example, more preferably the saturated hydrocarbon group.

The acyl group represented by each of A¹, A², and A³ is preferably, for example, an acyl group having 1 or more and 6 or less carbon atoms. That is, as the cellulose acylate, for example, cellulose acylate having an acyl group having 1 or more and 6 or less carbon atoms is preferable.

The acyl group represented by each of A¹, A², and A³ may be a group in which a hydrogen atom in the acyl group is substituted with a halogen atom (for example, a fluorine atom, a bromine atom, and an iodine atom), an oxygen atom, or a nitrogen atom, but is preferably, for example, not substituted.

Examples of the acyl group represented by each of A¹, A², and A³ include a formyl group, an acetyl group, a propionyl group, a butyryl group (butanoyl group), a propenoyl group, and a hexanoyl group. Among these, as the acyl group, for example, an acyl group having 2 or more and 4 or less carbon atoms is more preferable, and an acyl group having 2 or 3 carbon atoms is still more preferable from a viewpoint of improving the biodegradation rate of the resin particles.

Examples of the cellulose acylate include cellulose acetate (cellulose monoacetate, cellulose diacetate (DAC), or cellulose triacetate), cellulose acetate propionate (CAP), and cellulose acetate butyrate (CAB).

From the viewpoint of high biodegradability, the cellulose acylate is preferably, for example, cellulose acetate.

From the viewpoint of biodegradability, a substitution degree of the cellulose acylate is, for example, preferably 1.7 or more and 2.9 or less, more preferably 1.9 or more and 2.6 or less, still more preferably 2.0 or more and 2.5 or less, and particularly preferably 2.1 or more and 2.4 or less.

The substitution degree of cellulose acylate is an index indicating a degree to which a hydroxy group of cellulose is substituted with an acyl group. That is, the substitution degree is an index indicating a degree of acylation of cellulose acylate. Specifically, the substitution degree means an intramolecular average number of substitutions in which three hydroxy groups in a D-glucopyranose unit of cellulose acylate are substituted with acyl groups. The substitution degree is determined from an integral ratio of peaks of cellulose-derived hydrogen and acyl group-derived hydrogen by ¹H-NMR (JMN-ECA/manufactured by JEOL RESONANCE Inc.).

These cellulose derivatives may be used alone or in combination of two or more kinds thereof.

### - Number-Average Molecular Weight of Cellulose and Cellulose Derivative -

A number-average molecular weight of the cellulose and the cellulose derivative is, for example, preferably 5,000 or more, more preferably 10,000 or more, and still more preferably 15,000 or more.

In a case where the number-average molecular weight of the cellulose and the cellulose derivative is within the range, the porous cellulose structure is suppressed from being finely collapsed before kneading with the resin. As a result, secondary aggregation after the collapse is suppressed, fine and substantially uniform dispersion in the resin is easily realized, and the transparency and the impact resistance strength of the resin molded body are easily improved.

It should be noted that from the viewpoint of suppressing the deterioration of biodegradability, the number-average molecular weight of the cellulose and the cellulose derivative is, for example, preferably 50,000 or less, and more preferably 30,000 or less.

The number-average molecular weight of the cellulose and the cellulose derivative is measured by a gel permeation chromatography method (differential refractive index meter: Optilab T-rEX, manufactured by Wyatt Technology Corporation, multi-angle light scattering detector: DAWN HELEOS II, manufactured by Wyatt Technology Corporation, each one of TSKgel α-M column and α-3000 column, manufactured by Tosoh Corporation) using dimethylacetamide (added with 0.1 M lithium chloride) as a solvent.

### (Other Components)

The porous cellulose structure according to the present exemplary embodiment may include other components.

### (Characteristics of Porous Cellulose Structure)

### - Specific Surface Area -

A specific surface area of the porous cellulose structure according to the present exemplary embodiment is 1 m²/g or more and 150 m²/g or less, and is, for example, preferably 10 m²/g or more and 150 m²/g or less, and more preferably 20 m²/g or more and 100 m²/g or less.

In a case where the specific surface area of the porous cellulose structure is 1 m²/g or more, the reforming capability of the porous cellulose structure is sufficient and the impact resistance is improved.

In a case where the specific surface area of the porous cellulose structure is 150 m²/g or less, the porous cellulose structure is suppressed from being pulverized before kneading with the resin. As a result, secondary aggregation after the pulverization is suppressed, fine and substantially uniform dispersion in the resin is realized, and the transparency and the impact resistance strength of the resin molded body are improved.

The specific surface area of the porous cellulose structure is a BET specific surface area, and is a value measured by automatic measurement of a multipoint method using a specific surface area/pore distribution measuring device (BELSORP MAX II, Microtrac Retsch GmbH). The measurement temperature is set to 77 K and a nitrogen gas is used as the adsorbing gas.

It should be noted that before the measurement, a sample (that is, the porous cellulose structure) is subjected to vacuum drying at 100°C for 24 hours as a pretreatment, and water adsorbed in the pores of the sample is removed.

### - Void Ratio -

The void ratio of the porous cellulose structure according to the present exemplary embodiment is 10% or more and 50% or less, and is, for example, preferably 15% or more and 50% or less, and more preferably 20% or more and 50% or less.

In a case where the void ratio of the porous cellulose structure is 10% or more, the reforming capability of the porous cellulose structure is sufficient and the impact resistance is improved.

In a case where the void ratio of the porous cellulose structure is 50% or less, the porous cellulose structure is suppressed from being pulverized before kneading with the resin. As a result, secondary aggregation after the pulverization is suppressed, fine and substantially uniform dispersion in the resin is realized, and the transparency and the impact resistance strength of the resin molded body are improved.

The void ratio of the porous cellulose structure is measured as follows.

The porous cellulose structure is observed with a scanning electron microscope (SEM) at a magnification of 25,000 times to obtain an SEM image. The SEM image is incorporated into image processing software "ImageJ" and subjected to a binarization processing to determine an area of the entire porous cellulose structure and an area of the voids. Then, a proportion of the voids of the porous cellulose structure to the area of the entire porous cellulose structure is determined and the void ratio of the porous cellulose structure is determined.

This operation is performed 10 times to determine an average value.

### - Average Diameter -

An average diameter of the porous cellulose structure is, for example, preferably 1 µm or more and 500 µm or less, more preferably 1 µm or more and 355 µm or less, and still more preferably 1 µm or more and 150 µm or less.

In a case where the average diameter of the porous cellulose structure is 1 µm or more, the porous cellulose structure is collapsed in a case where the porous cellulose structure is kneaded with the resin, fine and substantially uniform dispersion in the resin is easily realized, and the transparency and the impact resistance strength of the resin molded body are improved.

In a case where the average diameter of the porous cellulose structure is 500 µm or less, the porous cellulose structure is suppressed from being pulverized before kneading with the resin. As a result, secondary aggregation after the pulverization is suppressed, fine and substantially uniform dispersion in the resin is easily realized, and the transparency and the impact resistance strength of the resin molded body are improved.

A method for measuring the average diameter of the porous cellulose structure is as follows.

The porous cellulose structure is observed with a scanning electron microscope (SEM) at a magnification of 250 times to obtain an SEM image. The SEM image is incorporated into image processing software "ImageJ" to determine an equivalent circle diameter from the area of the porous cellulose structure. Then, the average value of the equivalent circle diameters of 20 porous cellulose structures is determined and used as an average diameter.

### - Average Diameter of Porous Cellulose Structure in Resin -

In the porous cellulose structure according to the present exemplary embodiment, in a case where the porous cellulose structure is kneaded with a resin, the porous cellulose structure is present, for example, preferably with an average diameter of 50 µm or less, more preferably with an average diameter of 10 µm or less, and still more preferably with an average diameter of 1 µm or less, in the resin.

In a case where the porous cellulose structure is present with an average diameter of 50 µm or less in the resin, the porous cellulose structure is finely dispersed in the resin, and thus, the transparency and the impact resistance strength of the resin molded body are improved.

Furthermore, from the viewpoint of sufficiently exhibiting the reforming capability of the cellulose resin and improving the impact resistance of the resin molded body, it is preferable that the porous cellulose structure is present, for example, with an average diameter of 0.05 µm or more in the resin at the time of kneading the porous cellulose structure with the resin.

The average diameter of the porous cellulose structure in the resin is an average diameter of the porous cellulose structure in a case where the porous cellulose structure is kneaded with the resin under the conditions in "Example 1" which will be described later. Then, the average diameter of the porous cellulose structure is measured as follows.

A resin composition obtained by kneading the porous cellulose structure and the resin is cut. The porous cellulose structure on a cut surface of the resin composition is observed with a scanning electron microscope (SEM) at a magnification of 1,000 times to obtain an SEM image. The SEM image is incorporated into image processing software "ImageJ" to determine an equivalent circle diameter from the area of the porous cellulose structure. Then, the average value of the equivalent circle diameters of 20 porous cellulose structures is determined and used as an average diameter.

### - Specific Gravity -

A specific gravity of the porous cellulose structure according to the present exemplary embodiment is, for example, preferably 0.5 g/cm³ or more and 1.15 g/cm³ or less, more preferably 0.60 g/cm³ or more and 1.0 g/cm³ or less, and still more preferably 0.70 g/cm³ or more and 0.90 g/cm³ or less.

In a case where the specific gravity of the porous cellulose structure is within the range, it is easy to realize fine and substantially uniform dispersion in the resin at the time of kneading the porous cellulose structure into the resin, and the transparency and the impact resistance strength of the resin molded body are improved.

A method for measuring the specific gravity of the porous cellulose structure is as follows.

30 g of the structure is used as a sample and the gravity was measured three times by a water displacement method using an automatic densimeter (DSG-1, manufactured by Toyo Seiki Seisaku-sho, Ltd.), except that water is changed to ethanol as a measurement liquid, and an average of the values is adopted as a measured value.

### (Method for Producing Porous Cellulose Structure)

The porous cellulose structure according to the present exemplary embodiment is obtained, for example, by the following method.
(1) A cellulose derivative is added to a good solvent for the cellulose derivative, and then the mixture is heated to obtain a solution A in which the cellulose derivative is dissolved in the good solvent.
(2) A poor solvent for the cellulose derivative is added to the solution A to obtain a solution B.
(3) The solution B is rapidly cooled and subjected to phase separation to generate a gel-like substance of the cellulose derivative.
(4) The gel-like substance is washed and then dried to obtain a porous cellulose structure having the cellulose derivative as a main component.
(5) The obtained porous cellulose structure may be pulverized and sieved as necessary to remove coarse particles and aggregates. The pulverization method is not particularly limited, and is performed by, for example, a dry pulverization device such as a jet mill, a vibration mill, a ball mill, and a pin mill. The sieving method is performed by, for example, a known method such as a vibrating sieve and an air classifier.

Here, a porous cellulose structure having a cellulose, or a cellulose and a cellulose derivative as a main component is obtained, depending on the degree of saponification, by saponifying a gel-like substance (that is, by saponifying the cellulose derivative).

### <Resin Composition>

The resin composition according to the present exemplary embodiment is a resin composition consisting of a kneaded material including a transparent resin and the porous cellulose structure according to the present exemplary embodiment.

Specifically, the resin composition according to the present exemplary embodiment includes a transparent resin and a collapsed material obtained by causing the porous cellulose structure according to the present exemplary embodiment to be collapsed by kneading with the transparent resin.

### (Transparent Resin)

The transparent resin is a resin in which a haze value in a case where a thickness of a molded body of the transparent resin alone is 2 mm is 15% or less.

Examples of the transparent resin include vinyl-based resins consisting of a homopolymer of monomers such as styrenes (for example, styrene, p-chlorostyrene, and α-methylstyrene), (meth)acrylic acid esters (for example, methyl acrylate, ethyl acrylate, n-propyl acrylate, n-butyl acrylate, lauryl acrylate, 2-ethylhexyl acrylate, methyl methacrylate, ethyl methacrylate, n-propyl methacrylate, lauryl methacrylate, and 2-ethylhexyl methacrylate), ethylenically unsaturated nitriles (for example, acrylonitrile and methacrylonitrile), vinyl ethers (for example, vinyl methyl ether, and vinyl isobutyl ether), vinyl ketones (for example, vinyl methyl ketone, vinyl ethyl ketone, and vinyl isopropenyl ketone), olefins (for example, ethylene, propylene, and butadiene), and vinyl alcohol, or copolymers of two or more of these monomers, and amorphous polyolefins.

Examples of the transparent resin include non-vinyl-based resins such as a polyester resin, an epoxy resin, a polyurethane resin, a polyamide resin, a polyether resin, and modified rosin, mixtures of the resins with the vinyl-based resins, or graft polymers obtained by polymerizing a vinyl-based monomer together with the resins.

Examples of the transparent resin also include a natural polymer.

Here, examples of the polyester resin include an aliphatic polyester resin and an aliphatic aromatic polyester resin.

Examples of the aliphatic polyester resin include polyhydroxyalkanoic acids such as polylactic acid (PLA), polyglycolic acid (PGA), polyhydroxyalkanoate (PHA), polycaprolactone, polybutylene succinate (PBS), polybutylene succinate/adipate (PBSA), and polyethylene succinate (PBA).

Examples of the aliphatic aromatic polyester resin include a polybutylene adipate/terephthalate copolymer resin (PBAT) and a polytetramethylene adipate/terephthalate copolymer resin.

Examples of the natural polymer include starch, cellulose, chitin, chitosan, gluten, gelatin, zein, soybean protein, collagen, and keratin.

Examples of the biodegradable resin also include cellulose derivatives (cellulose acylate, cellulose ether, hydroxyalkyl cellulose, and carboxymethyl cellulose).

Among these transparent resins, from the viewpoint of environmental suitability, examples of the transparent resin include a biomass resin and a biodegradable resin, and in particular, a resin (in particular, a polylactic acid) corresponding to both the biomass resin and the biodegradable resin is preferable.

Furthermore, the biodegradable resin is a resin that is decomposed into water and carbon dioxide by microorganisms, and is a resin other than cellulose. Specifically, in the present exemplary embodiment, the biodegradable resin means a resin in which an aerobic-condition biodegradation rate measured by the method according to ISO 14855-1: 2012 is 5% or more in 28 days.

Each of these transparent resins may be used alone or in combination of two or more kinds thereof.

The content of the transparent resin is, for example, preferably 90% by mass or more and 99.9% by mass or less, and more preferably 95% by mass or more and 99.9% by mass or less with respect to the resin composition.

### (Content of Porous Cellulose Structure)

A content of the porous cellulose structure is, for example, preferably 0.1% by mass or more and 20% by mass or less, more preferably 1% by mass or more and 10% by mass or less, and still more preferably 1% by mass or more and 5% by mass or less with respect to the transparent resin.

In a case where the content of the porous cellulose structure is within the range, a resin molded body having sufficient transparency and high impact resistance is easily obtained.

### (Other Components)

The resin composition according to the present exemplary embodiment may include other components.

Examples of the other components include a plasticizer, a flame retardant, a compatibilizer, a mold release agent, a light fastener, a weather resistant agent, a colorant, a pigment, a modifier, a drip inhibitor, an antistatic agent, a hydrolysis inhibitor, a filler, a reinforcing agent (glass fiber, carbon fiber, talc, clay, mica, glass flake, milled glass, glass beads, crystalline silica, alumina, silicon nitride, aluminum nitride, boron nitride, and the like), an acid acceptor (an oxide such as magnesium oxide or aluminum oxide; a metal hydroxide such as magnesium hydroxide, calcium hydroxide, aluminum hydroxide, and hydrotalcite; calcium carbonate; and talc), and a reactive trapping agent (for example, an epoxy compound, an acid anhydride compound, and a carbodiimide).

The content of the other components is, for example, preferably 0% by mass or more and 5% by mass or less with respect to the total amount of the resin composition. Here, "0% by mass" means that the other components are not included.

### (Characteristics of Resin Composition)

### - Average Diameter of Porous Cellulose Structure in Transparent Resin -

In the resin composition according to the present exemplary embodiment, the porous cellulose structure (that is, the collapsed product of the porous cellulose structure according to the present exemplary embodiment) is present, in the transparent resin, for example, preferably with an average diameter of 50 µm or less, more preferably with an average diameter of 10 µm or less, and still more preferably with an average diameter of 1 µm or less.

In a case where the porous cellulose structure is present with an average diameter of 50 µm or less in the transparent resin, the porous cellulose structure is finely dispersed in the resin, and the transparency and the impact resistance strength of the resin composition are improved.

The average diameter of the porous cellulose structure in the transparent resin is measured as follows.

The resin composition is cut. The porous cellulose structure on a cut surface of the resin composition is observed with a scanning electron microscope (SEM) at a magnification of 1,000 times to obtain an SEM image. The SEM image is incorporated into image processing software "ImageJ" to determine an equivalent circle diameter from the area of the porous cellulose structure. Then, the average value of the equivalent circle diameters of 20 porous cellulose structures is determined and used as an average diameter.

### - Haze Value -

In the resin composition according to the present exemplary embodiment, a haze value in a case where the thickness of a molded body of the resin composition is 2 mm is, for example, preferably 15% or less, more preferably 10% or less, and still more preferably 7% or less. Incidentally, the haze value is ideally 0%.

In a case where the haze value is within the range, a resin molded body having sufficiently high transparency can be obtained.

### (Charpy Impact Strength)

The Charpy impact strength of the resin composition according to the present exemplary embodiment is, for example, preferably 1 kJ/m² or more, more preferably 2 kJ/m² or more, still more preferably 2.5 kJ/m² or more, particularly preferably 3 kJ/m² or more, and most preferably 4 kJ/m² or more.

In a case where the Charpy impact strength is within the range, a resin molded body having sufficiently high impact resistance can be easily obtained.

Here, the haze value and the Charpy impact strength are values measured by the methods described in "Examples" which will be described later.

### (Method for Producing Resin Composition)

Examples of a method for producing the resin composition according to the present exemplary embodiment include a method in which components are each mixed and melt-kneaded. A means for the melt-kneading is not particularly limited, and examples thereof include a twin-screw extruder, a Henschel mixer, a Banbury mixer, a single-screw extruder, a multi-screw extruder, and a kneader.

Then, by controlling the kneading conditions, a resin composition including a transparent resin and a collapsed substance obtained by kneading the transparent resin and the porous cellulose structure according to the present exemplary embodiment can be obtained.

### <Resin Molded Body>

The resin molded body according to the present exemplary embodiment includes the resin composition according to the present exemplary embodiment. That is, the resin molded body according to the present exemplary embodiment is configured to have the same composition as the resin composition according to the present exemplary embodiment.

From the viewpoint of a high degree of freedom in shape, examples of the molding method for the resin molded body according to the present exemplary embodiment include an injection molded body obtained by injection molding.

The injection molding for the resin molded body according to the present exemplary embodiment may be performed using, for example, a commercially available device such as NEX500 manufactured by Nissei Plastic Industrial Co., Ltd., NEX150 manufactured by Nissei Plastic Industrial Co., Ltd., NEX7000 manufactured by Nissei Plastic Industrial Co., Ltd., PNX40 manufactured by Nissei Plastic Industrial Co., Ltd., and SE50D manufactured by Sumitomo Heavy Industries, Ltd.

The resin molded body according to the present exemplary embodiment may be a resin molded body obtained by another molding method. As another molding method, for example, extrusion molding, blow molding, thermal press molding, calendar molding, coating molding, cast molding, dipping molding, vacuum molding, transfer molding, or the like may be applied.

Examples of the application of the resin molded body according to the present exemplary embodiment include a housing for electronic or electrical apparatuses or home electric appliances; various parts for electronic or electrical apparatuses or home electric appliances; an interior part for an automobile; a block assembly toy; a plastic model kit; a storage case for a CD-ROM or a DVD; tableware; a beverage bottle; a food tray; a wrapping material; a film; and a sheet.

### Examples

Hereinafter, Examples will be described below; however, the present invention is not limited to these Examples. Incidentally, in the following description, all "parts" and "%" are in terms of mass unless otherwise specified.

### <Manufacture of Porous Cellulose Structure>

### (Porous Cellulose Structure CPS (1))

A solution A obtained by adding 5 parts by mass of cellulose acetate DAC (1) to 20 parts by mass of dimethylformamide is stirred in a container at 90°C for 1 hour. Cellulose acetate is dissolved in dimethylformamide in the solution A, 25 parts by mass of hexanol is slowly added to the solution A under stirring, and a solution B thus obtained is stirred for 1 hour. Thereafter, the solution B is rapidly cooled by dipping the container in ice water and subjected to phase separation to obtain a gel product of the porous cellulose structure. The generated gel product is washed with 200 parts by mass of ethanol and vacuum-dried at 50°C for 24 hours to obtain a porous cellulose structure. Thereafter, the structure is pulverized with a mill mixer, and sieving with a 106 µm sieve is carried out to obtain a finely pulverized cellulose structure.

### (Porous Cellulose Structure CPS (2))

A porous cellulose structure CPS (2) is obtained in the same manner as for the porous cellulose structure CPS (1), except that the mesh diameter of the sieving net is 53 µm.

### (Porous Cellulose Structure CPS (3))

A porous cellulose structure CPS (3) is obtained in the same manner as for the porous cellulose structure CPS (1), except that the amount of cellulose acetate DAC (1) is set to 7.5 parts by mass.

### (Porous Cellulose Structure CPS (4))

A porous cellulose structure CPS (4) is obtained in the same manner as for the porous cellulose structure CPS (1), except that the amount of cellulose acetate DAC (1) is set to 3.5 parts by mass.

### (Porous Cellulose Structure CPS (5))

A porous cellulose structure CPS (5) is obtained in the same manner as for the porous cellulose structure CPS (1), except that cellulose acetate DAC (1) is changed to DAC (2).

### (Porous Cellulose Structure CPS (6))

A porous cellulose structure CPS (6) is obtained in the same manner as for the porous cellulose structure CPS (1), except that the cellulose acetate DAC (1) is changed to DAC (3).

### (Porous Cellulose Structure CPS (7))

A porous cellulose structure CPS (7) is obtained in the same manner as for the porous cellulose structure CPS (1), except that the cellulose acetate DAC (1) is changed to DAC (4).

### (Porous Cellulose Structure CPS (8))

A porous cellulose structure CPS (8) is obtained in the same manner as for the porous cellulose structure CPS (1), except that cellulose acetate is changed to triacetyl cellulose.

### (Porous Cellulose Structure CPS (9))

A porous cellulose structure CPS (9) is obtained in the same manner as for the porous cellulose structure CPS (1), except that cellulose acetate is changed to cellulose acetate propionate.

### (Porous Cellulose Structure CPS (10))

A porous cellulose structure CPS (10) is obtained in the same manner as for the porous cellulose structure CPS (1), except that cellulose acetate is changed to cellulose acetate butyrate.

### (Porous Cellulose Structure CPS (11))

A porous cellulose structure CPS (11) is obtained in the same manner as for the porous cellulose structure CPS (1), except that the gel product is saponified with an alkali before washing with ethanol.

### (Porous Cellulose Structure CPS (12))

A porous cellulose structure CPS (12) is obtained in the same manner as for the porous cellulose structure CPS (1), except that the mesh diameter of the sieve is 500 µm.

### (Porous Cellulose Structure CPS (13))

A porous cellulose structure CPS (13) is obtained in the same manner as for the porous cellulose structure CPS (1), except that the amount of cellulose acetate is set to 12.5 parts by mass.

### (Porous Cellulose Structure CPS (14))

A porous cellulose structure CPS (14) is obtained in the same manner as for the porous cellulose structure CPS (1), except that the cellulose acetate DAC (1) is changed to DAC (5).

### (Porous Cellulose Structure CPS (15))

A porous cellulose structure CPS (15) is obtained in the same manner as for the porous cellulose structure CPS (1), except that the sieving step is not performed.

### (Porous Cellulose Structure CPS (16))

A porous cellulose structure CPS (16) is obtained in the same manner as for the porous cellulose structure CPS (1), except that 180 parts by mass of dimethylformamide and 450 parts by mass of hexanol are changed.

### (Porous Cellulose Structure CPS (17))

A porous cellulose structure CPS (17) is obtained in the same manner as for the porous cellulose structure CPS (1), except that the amount of cellulose acetate is set to 15 parts by mass.

### (Porous Cellulose Structure CPS (18))

A porous cellulose structure CPS (18) is obtained in the same manner as for the porous cellulose structure CPS (1), except that dimethylformamide is changed to 180 parts by mass and hexanol is changed to 450 parts by mass.

### (Porous Cellulose Structure CPS (C1))

Cellulose acetate DAC (1) is pulverized with a mill mixer and then sieved with a 106 µm sieve to obtain a cellulose structure (C1).

### (Porous Cellulose Structure CPS (C2))

130 parts by mass of cellulose acetate DAC (1) is dissolved in 870 parts by mass of ethyl acetate. This is added to a dispersion liquid obtained by dispersing 50 parts by mass of calcium carbonate in 500 parts by mass of pure water, and the mixture is stirred for 3 hours. This mixture is added to a dispersion liquid obtained by dispersing 4 parts by mass of carboxymethyl cellulose and 200 parts by mass of methyl ethyl ketone in 600 parts by mass of pure water, and the mixture is stirred with a high-speed emulsifier for 5 minutes. 10 g of sodium hydroxide is added thereto and the mixture is stirred at 80°C for 3 hours to remove ethyl acetate and methyl ethyl ketone. 10 g of dilute hydrochloric acid is added thereto and the residue is filtered to obtain non-porous cellulose particles.

### (Characteristics of Porous Cellulose Structure)

The following characteristics of the obtained porous cellulose structure are measured according to the above-described method.
· Average diameter of porous cellulose structure
· Specific surface area (denoted as "BET" in the table) of porous cellulose structure
· Void ratio of porous cellulose structure
· Specific gravity of porous cellulose structure
· Average diameter (denoted as "Dispersion diameter" in the table) of the porous cellulose structure present in the resin in a case where the porous cellulose structure is kneaded with the resin under the same transparent resin and kneading conditions as in Example 1

### <Examples 1 to 20 and Comparative Examples 1 to 6>

Under the conditions of composition, a cylinder temperature, and a kneading torque shown in Table 1, each component is charged into a twin-screw extruder (manufactured by

Shibaura Machine Co., Ltd., TEM58SS), and each component is kneaded, cooled, and cut to obtain a resin pellet (corresponding to a resin composition).

### <Evaluation>

### (Resin Molded Body)

Under the conditions of a cylinder temperature, a mold temperature, and a mold holding time shown in Table 1, the resin pellet of each Example is charged into an injection molding device (Nissei Plastic Industrial Co., Ltd., NEX500) to mold an ISO multi-purpose dumbbell test piece (test part: width 8 mm × thickness 4 mm × length 110 mm).

### (Haze Value)

Using a haze meter (manufactured by Nippon Denshoku Industries Co., Ltd., TZ7700), a haze value of the obtained ISO multi-purpose dumbbell test piece is measured.

### (Charpy Impact Strength)

The obtained ISO multi-purpose dumbbell test piece is subjected to A-notch machining by the method in accordance with ISO 179-1:2010.

Then, using an impact strength measuring device (Charpy Auto Impact Tester, manufactured by Toyo Seiki Seisaku-sho, Ltd.), the Charpy impact strength is measured with respect to the test piece after the machining under the conditions of room temperature (25°C).

### <Materials Used>

Hereinafter, details of the materials used will be described.

### - Raw Materials for Additive -

· DAC (1): "Product name CA-398-3" manufactured by Eastman Chemical Company, cellulose diacetate, number-average molecular weight Mn = 15,000
· DAC (2): "Product name L20" manufactured by Daicel Corporation, cellulose diacetate, number-average molecular weight Mn = 15,000
· DAC (3): "Product name L50" manufactured by Daicel Corporation, cellulose diacetate, number-average molecular weight Mn = 50,000
· DAC (4): "Product name L70" manufactured by Daicel Corporation, cellulose diacetate, number-average molecular weight Mn = 75,000
· DAC (5): Cellulose diacetate synthesized in-house, number-average molecular weight Mn = 13,000
· TAC: "Product name LT-35", manufactured by Daicel Corporation, cellulose triacetate, number-average molecular weight Mn = 50,000
· CAP: "Product name CAP-482-20" manufactured by Eastman Chemical Company, cellulose acetate propionate, number-average molecular weight Mn = 72,000
· CAB: "Product name CAB-381-20" manufactured by Eastman Chemical Company, cellulose acetate butyrate, number-average molecular weight Mn = 85,000
· CNF: "Product name BiNFIS DRY" manufactured by Sugino Machine Limited, cellulose nanofiber

### - Transparent Resin -

· PMMA: Polymethyl methacrylate (manufactured by Asahi Kasei Corporation, DELPET 720V)
· PET: Polyethylene terephthalate (manufactured by Lotte Chemical, BCB80)
· PP: Polypropylene (manufactured by Japan Polypropylene Corporation, NOVATEC PP MG03BD)
· PS: Polystyrene (manufactured by PS JAPAN Corporation, GPPS-HF77)

**[Table 1-1]**

| | Additives (porous cellulose structure and the like) | | | | | | | | | Transparent resin | |
|---|---|---|---|---|---|---|---|---|---|---|---|
| | Type | Component | Mn | Average diameter (µm) | BET (m²/g) | Void ratio (%) | Specific gravity | Dispersion diameter (µm) | Addition amount (parts by mass) | Type | Addition amount (parts by mass) |
| Example 1 | CPS (1) | DAC (1) | 15,000 | 100 | 20 | 25 | 0.71 | 2 | 1 | PMMA | 100 |
| Example 2 | CPS (2) | DAC (1) | 15,000 | 50 | 50 | 25 | 0.72 | 1 | 1 | PMMA | 100 |
| Example 3 | CPS (3) | DAC (1) | 15,000 | 100 | 10 | 25 | 0.7 | 4 | 1 | PMMA | 100 |
| Example 4 | CPS (4) | DAC (1) | 15,000 | 100 | 60 | 45 | 0.68 | 0.5 | 1 | PMMA | 100 |
| Example 5 | CPS (5) | DAC (2) | 15,000 | 100 | 15 | 20 | 0.7 | 2 | 1 | PMMA | 100 |
| Example 6 | CPS (6) | DAC (3) | 50,000 | 100 | 10 | 10 | 0.79 | 4 | 1 | PMMA | 100 |
| Example 7 | CPS (7) | DAC (4) | 75,000 | 100 | 5 | 10 | 0.89 | 15 | 1 | PMMA | 100 |
| Example 8 | CPS (8) | TAC | 50,000 | 100 | 10 | 10 | 0.72 | 7 | 1 | PMMA | 100 |
| Example 9 | CPS (9) | CAP | 72,000 | 100 | 10 | 10 | 0.91 | 9 | 1 | PMMA | 100 |
| Example 10 | CPS (10) | CAB | 85,000 | 100 | 10 | 10 | 0.89 | 8 | 1 | PMMA | 100 |
| Example 11 | CPS (11) | cellulose DAC (2) + saponification | 15,000 | 100 | 15 | 25 | 0.71 | 18 | 1 | PMMA | 100 |
| Example 12 | CPS (2) | DAC (1) | 15,000 | 50 | 50 | 25 | 0.72 | 5 | 1 | PET | 100 |
| Example 13 | CPS (2) | DAC (1) | 15,000 | 50 | 50 | 25 | 0.72 | 3 | 1 | PP | 100 |
| Example 14 | CPS (2) | DAC (1) | 15,000 | 50 | 50 | 25 | 0.72 | 3 | 1 | PS | 100 |
| Example 15 | CPS (12) | DAC (1) | 15,000 | 500 | 5 | 30 | 0.92 | 30 | 1 | PMMA | 100 |
| Example 16 | CPS (13) | DAC (1) | 15,000 | 100 | 1 | 10 | 0.85 | 25 | 1 | PMMA | 100 |
| Example 17 | CPS (14) | DAC (5) | 15,000 | 100 | 20 | 25 | 0.71 | 2 | 1 | PMMA | 100 |
| Example 18 | CPS (15) | DAC (1) | 15,000 | 650 | 8 | 20 | 0.71 | 50 | 1 | PMMA | 100 |
| Example 19 | CPS (15) | DAC (1) | 15,000 | 650 | 8 | 20 | 0.71 | 60 | 1 | PMMA | 100 |
| Example 20 | CPS (16) | DAC (1) | 15,000 | 0.15 | 150 | 15 | 0.69 | 0.15 | 1 | PMMA | 100 |
| Comparative Example 1 | | - | - | - | - | - | - | | 0 | PMMA | 100 |
| Comparative Example 2 | CPS (C1) | DAC (1) | 15,000 | 100 | 0.08 | 2 | 1.45 | 50 | 1 | PMMA | 100 |
| Comparative Example 3 | CPS (C2) | DAC (1) | 15,000 | 10 | 1 | 0 | 1.51 | 40 | 1 | PMMA | 100 |
| Comparative Example 4 | CNF (1) | CNF | 100,000 | 0.01 | 170 | 55 | 0.53 | 50 | 1 | PMMA | 100 |
| Comparative Example 5 | CPS (17) | DAC (1) | 15,000 | 100 | 0.7 | 5 | 0.95 | 65 | 1 | PMMA | 100 |
| Comparative Example 6 | CPS (18) | DAC (1) | 15,000 | 0.1 | 170 | 55 | 0.78 | 50 | 1 | PMMA | 100 |

**[Table 1-2]**

| | Kneading conditions | | Molding conditions | | | Charpy impact strength (kJ/m²) | Haze value (%) |
|---|---|---|---|---|---|---|---|
| | Cylinder temperature (°C) | Kneading torque (N·m) | Cylinder temperature (°C) | Mold temperature (°C) | Mold holding time (min) | | |
| Example 1 | 220 | 2,200 | 220 | 40 | 2 | 45 | 10 |
| Example 2 | 220 | 2,300 | 220 | 110 | 2 | 4.3 | 8 |
| Example 3 | 220 | 2,300 | 220 | 110 | 2 | 4.2 | 11 |
| Example 4 | 220 | 2,100 | 220 | 110 | 2 | 4.3 | 8 |
| Example 5 | 220 | 2,200 | 220 | 110 | 2 | 40 | 10 |
| Example 6 | 220 | 2,400 | 220 | 110 | 2 | 4.2 | 10 |
| Example 7 | 220 | 2,400 | 220 | 110 | 2 | 2.8 | 10 |
| Example 8 | 220 | 2,800 | 220 | 110 | 2 | 3.6 | 8 |
| Example 9 | 220 | 1,300 | 220 | 110 | 2 | 3.5 | 12 |
| Example 10 | 220 | 1,700 | 220 | 110 | 2 | 32 | 12 |
| Example 11 | 220 | 2,600 | 220 | 110 | 2 | 27 | 14 |
| Example 12 | 170 | 2,500 | 170 | 60 | 4 | 3.5 | 11 |
| Example 13 | 160 | 1,900 | 160 | 60 | 4 | 3.6 | 10 |
| Example 14 | 210 | 2,200 | 210 | 40 | 1 | 3.7 | 11 |
| Example 15 | 220 | 2,800 | 220 | 40 | 2 | 4.3 | 14 |
| Example 16 | 220 | 2,200 | 220 | 40 | 2 | 4.1 | 13 |
| Example 17 | 220 | 2,200 | 220 | 40 | 2 | 25 | 8 |
| Example 18 | 220 | 2,800 | 220 | 40 | 2 | 3.1 | 14 |
| Example 19 | 220 | 1,700 | 220 | 40 | 2 | 2.8 | 15 |
| Example 20 | 220 | 2,200 | 220 | 40 | 2 | 2.6 | 8 |
| Comparative Example 1 | 180 | 2,700 | 180 | 110 | 2 | 0.8 | 8 |
| Comparative Example 2 | 180 | 2,500 | 180 | 110 | 2 | 0.9 | 10 |
| Comparative Example 3 | 180 | 2,600 | 180 | 110 | 2 | 0.8 | 28 |
| Comparative Example 4 | 180 | 2,900 | 180 | 110 | 2 | 0.9 | 14 |
| Comparative Example 5 | 180 | 2,700 | 180 | 110 | 2 | 0.9 | 29 |
| Comparative Example 6 | 180 | 2,700 | 180 | 110 | 2 | 0.9 | 14 |

From the results, it can be seen that in the present Examples, a resin molded body (that is, a resin composition) having high transparency and a high impact strength is obtained, as compared with Comparative Examples.

The present exemplary embodiment includes the following aspects.
(((1))) A porous cellulose structure comprising:
   at least one of a cellulose or a cellulose derivative as a main component,
   wherein a specific surface area is 1 m²/g or more and 150 m²/g or less, and
   a void ratio is 10% or more and 50% or less.
(((2))) The porous cellulose structure according to (((1))),
   wherein in a case where the porous cellulose structure is kneaded with a resin, the porous cellulose structure is present with an average diameter of 50 µm or less in the resin.
(((3))) The porous cellulose structure according to (((1))) or (((2))),
   wherein a number-average molecular weight of the cellulose and the cellulose derivative is 15,000 or more.
(((4))) The porous cellulose structure according to any one of (((1))) to (((3))),
   wherein the cellulose derivative is cellulose acetate.
(((5))) A resin composition consisting of a kneaded material including:
   a transparent resin, and
   the porous cellulose structure according to any one of (((1))) to (((4))).
(((6))) The resin composition according to (((5))),
   wherein a haze value in a case where a thickness of a molded body of the resin composition is 2 mm is 15% or less.
(((7))) The resin composition according to (((5))) or (((6))),
   wherein a Charpy impact strength is 2.5 kJ/m² or more.

The effects of the aspects are as follows.

According to (((1))), there is provided a porous cellulose structure including at least one of a cellulose or a cellulose derivative as a main component, in which the porous cellulose structure makes it possible to obtain a resin molded body having high transparency and a high impact strength, as compared with a case where a specific surface area is less than 1 m²/g or more than 150 m²/g, or a void ratio is less than 10% or more than 50%.

According to (((2))), there is provided the porous cellulose structure, which makes it possible to obtain a resin molded body having high transparency and a high impact strength in a case where the porous cellulose structure is kneaded with a resin, as compared with a case where the porous cellulose structure is present with an average diameter of more than 50 µm in the resin.

According to (((3))), there is provided the porous cellulose structure, which makes it possible to obtain a resin molded body having high transparency and a high impact strength, as compared with a case where a number-average molecular weight of the cellulose and the cellulose derivative is less than 15,000.

According to (((4))), there is provided the porous cellulose structure, which makes it possible to obtain a resin molded body having high transparency and a high impact strength as well as biodegradability, as compared with a case where the cellulose derivative is cellulose acetate propionate.

According to (((5))), (((6))), or (((7))), there is provided a resin composition consisting of a kneaded material including a transparent resin and a porous cellulose structure including at least one of a cellulose or a cellulose derivative as a main component, in which the porous cellulose structure makes it possible to obtain a resin molded body having high transparency and a high impact strength, as compared with a case where the porous cellulose structure having a specific surface area of less than 1 m²/g or more than 150 m²/g, or a void ratio of less than 10% or more than 50% is applied.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A porous cellulose structure comprising:
at least one of a cellulose or a cellulose derivative as a main component,
wherein a specific surface area is 1 m²/g or more and 150 m²/g or less, and
a void ratio is 10% or more and 50% or less.

2. The porous cellulose structure according to claim 1,
wherein in a case where the porous cellulose structure is kneaded with a resin, the porous cellulose structure is present with an average diameter of 50 µm or less in the resin.

3. The porous cellulose structure according to claim 1 or 2,
wherein a number-average molecular weight of the cellulose and the cellulose derivative is 15,000 or more.

4. The porous cellulose structure according to any one of claims 1 to 3,
wherein the cellulose derivative is cellulose acetate.

5. A resin composition consisting of a kneaded material including:
a transparent resin, and
the porous cellulose structure according to any one of claims 1 to 4.

6. The resin composition according to claim 5,
wherein a haze value in a case where a thickness of a molded body of the resin composition is 2 mm is 15% or less.

7. The resin composition according to claim 5 or 6,
wherein a Charpy impact strength is 2.5 kJ/m² or more.
